# DEMANDE DE BREVET EUROPEEN

(11) **EP 2 621 151 A1**
(43) Date de publication de la demande: **31.07.2013**
(21) Numéro de dépôt: 12305079.1
(22) Date de dépôt: 24.01.2012
(51) Int. Cl.: H04M 1/2745

(54) **liste priorisé d'appels perdus**

(71) Demandeur: Alcatel Lucent, 75007 Paris (FR)
(72) Inventeur: Trinite, Benoit, 92707 COLOMBES (FR)
(74) Mandataire: Sciaux, Edmond

(57) **Abrégé**

Un terminal téléphonique (T) permettant d'afficher une liste d'appels perdus, comporte :
- des moyens pour consulter des données d'appels perdus représentant une suite d'appels perdus destinés à ce terminal, ces données étant mémorisées dans une base de données d'appels perdus (M) associée à un serveur d'appels (CH), et ces données comportant l'heures/date de chaque appel perdu et un identifiant de l'appelant ;
- et des moyens pour afficher une image représentant des appels perdus, sur un afficheur (TD) intégré au terminal (T), la représentation de chaque appel perdu étant fonction de l'heures/date de l'appel perdu, fournie par la base de données d'appels perdus (M);
- des moyens pour consulter des premières données propres à un appelant, dans au moins une seconde base de données (DB, PR, DS) stockant des données propres à des usagers d'un réseau de téléphonie (EN) ;
- des moyens pour déterminer un poids pour chaque appel perdu qui est à afficher, ce poids étant déterminé en fonction des premières données propres à l'appelant correspondant à cet appel perdu ;

et en ce que les moyens pour afficher une image, comportent des moyens pour afficher chaque appel perdu avec un format variable qui est fonction du poids déterminé pour cet appel perdu.

## Description

L'invention concerne un terminal téléphonique permettant d'afficher une liste d'appels perdus, plus particulièrement dans un réseau d'entreprise comportant un autocommutateur. Un terminal téléphonique d'entreprise (poste téléphonique ou ordinateur personnel exécutant un logiciel de téléphonie) permet d'afficher une liste des appels perdus, c'est-à-dire non répondus, sous la forme d'une liste. L'ordre de la liste est un ordre chronologique, les derniers appels étant placés en tête de liste car l'intérêt de connaître un appel perdu diminue au fil du temps. Pour cela, un terminal téléphonique d'entreprise comporte :
- des moyens pour consulter et mémoriser des données d'appels perdus représentant une suite d'appels perdus destinés à ce terminal, ces données étant fournies par une base de données d'appels perdus associée à un serveur d'appels, et ces données comportant l'heure et la date de chaque appel perdu ;
- des moyens pour déterminer quels sont les N derniers appels perdus destinés au terminal T, le nombre N étant prédéterminé ;
- et des moyens pour afficher une image représentant ces N derniers appels perdus sous la forme d'une liste, la représentation de chaque appel ayant une position, sur un axe vertical, qui est fonction de l'heure et de la date de l'appel perdu considéré.

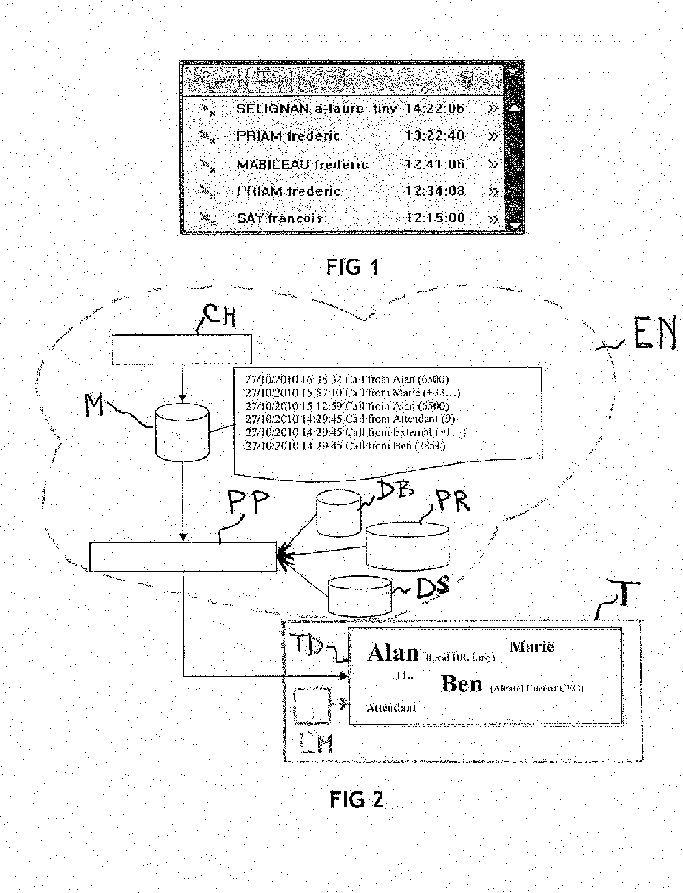

La figure 1 représente une telle liste d'appels perdus présentée par ordre chronologique sur un terminal téléphonique selon l'art antérieur. Tous les appels perdus sont présentés avec un même format, à raison d'un appel par ligne : Heure/date de l'appel, nom et prénom de l'appelant pour un appel venant du réseau d'entreprise considéré ; ou heure/date et une indication « Appel Extérieur » pour un appel venant de l'extérieur au réseau d'entreprise considéré. Sélectionner une ligne permet éventuellement d'afficher, pour l'appel sélectionné, des informations supplémentaires et des options telles que Rappeler, Effacer, etc. Les appels les plus récents sont présentés en haut de la liste. L'usager peut faire défiler la liste si le nombre d'appels perdus est tel qu'ils ne peuvent pas être tous affichés simultanément dans la fenêtre d'affichage.

Cependant les appels perdus n'ont pas tous la même importance. Un appel provenant d'un supérieur hiérarchique est généralement considéré comme plus important qu'un appel provenant d'un autre employé de même niveau hiérarchique, quelle que soit son heure d'arrivée. Un appel d'un gros client est généralement considéré comme plus important qu'un appel provenant d'un petit client quelle que soit son heure d'arrivée ; etc. Il est nécessaire de lire les noms dans toute la liste affichée pour déterminer quels sont les appels perdus les plus importants. Cette lecture est lente et il y a toujours le risque de rater un nom correspondant à un appel important.

Le but de l'invention est de proposer un terminal téléphonique permettant d'afficher une liste d'appels perdus de manière que l'utilisateur connaisse plus rapidement et plus surement les appels perdus importants, quelles que soient leurs heures d'arrivée respectives.

L'objet de l'invention est un terminal téléphonique permettant d'afficher une liste d'appels perdus, comportant :
- des moyens pour consulter des données d'appels perdus représentant une suite d'appels perdus destinés à ce terminal, ces données étant mémorisées dans une base de données d'appels perdus associée à un serveur d'appels, et ces données comportant l'heures/date de chaque appel perdu et un identifiant de l'appelant ;
- et des moyens pour afficher une image représentant des appels perdus, sur un afficheur intégré au terminal, la représentation de chaque appel perdu étant fonction de l'heures/date de l'appel perdu, fournie par la base de données d'appels perdus ; **caractérisé en ce qu'**il comporte en outre :
- des moyens pour consulter des premières données propres à un appelant, dans au moins une seconde base de données stockant des données propres à des usagers d'un réseau de téléphonie ;
- des moyens pour déterminer un poids pour chaque appel perdu qui est à afficher, ce poids étant déterminé en fonction des premières données propres à l'appelant correspondant à cet appel perdu ;
et en ce que les moyens pour afficher une image, comportent des moyens pour afficher chaque appel perdu avec un format variable qui est fonction du poids déterminé pour cet appel perdu.

Le terminal ainsi caractérisé peut afficher de manière plus visible certains des appels perdus quelles que soient leurs heures d'arrivée respectives parce que les moyens pour afficher des appels perdus les affichent avec un format variable (par exemple en variant la taille de la police) qui est fonction de données autres que leurs heures d'arrivée respectives (par exemple les positions hiérarchiques respectives des appelants), grâce au fait que le terminal comporte des moyens pour déterminer un poids pour chaque appel perdu qui est à afficher, ce poids étant déterminé en fonction d'autres données, propres à l'appelant considéré, que le terminal va consulter dans une deuxième base de données. Ces données propres à un appelant sont utilisées pour constituer des critères supplémentaires de discrimination entre les appels, et ces critères supplémentaires sont utilisés par le terminal pour faire varier le poids et donc le format de présentation, et pas seulement faire varier la position verticale de la représentation des appels perdus en fonction de leurs dates/heures respectives.

Selon un mode de réalisation particulier, les moyens pour déterminer un poids pour chaque appel perdu comportent en outre des moyens pour consulter des secondes données propres à un appelant, dans une troisième base de données stockant, dans le terminal, des données propres à des appelants ;
et les moyens pour déterminer un poids pour chaque appel perdu comportent des moyens pour déterminer ledit poids en fonction aussi des troisièmes données propres à l'appelant correspondant à l'appel perdu (Ces données indiquant, par exemple, que l'appelant est un client important).

Dans des modes de réalisation préférés, le procédé selon l'invention peut comporter une ou plusieurs des caractéristiques suivantes :

Les moyens pour afficher chaque appel perdu avec un format variable qui est notamment fonction du poids déterminé pour cet appel perdu comportent des moyens pour afficher des appels perdus selon une seule dimension, en affichant une simple liste verticale, ordonnée
-- soit par poids décroissants, puis par heures et dates décroissantes ;
-- soit par heures et dates décroissantes puis par poids décroissants.

Les moyens pour afficher chaque appel perdu avec un format variable qui est notamment fonction du poids déterminé pour cet appel perdu comportent des moyens pour afficher des appels perdus selon deux dimensions, avec un positionnement aléatoire de chaque appel et avec une taille de police fonction du poids de l'appel considéré.

Les moyens pour afficher chaque appel perdu avec un format variable qui est notamment fonction du poids déterminé pour cet appel perdu comportent des moyens pour afficher des appels perdus selon deux dimensions, la représentation de chaque appel perdu ayant deux coordonnées respectivement fonctions du poids et de l'heure/date de cet appel perdu.

Les moyens pour afficher chaque appel perdu avec un format variable qui est notamment fonction du poids déterminé pour cet appel perdu comportent des moyens pour afficher un même appel avec deux polices différentes : une première police qui est la plus grande des deux, pour afficher un nom/prénom, ou un identifiant de client, ou un numéro de téléphone de l'appelant, d'une part, et une seconde police pour afficher d'autres informations, d'autre part. Selon un mode de réalisation particulier, la première police a une taille qui est fonction du poids attribué à l'appel perdu considéré. Selon un mode de réalisation particulier, la taille de la seconde police est uniforme pour tous les appels perdus.

L'invention sera mieux comprise et d'autres caractéristiques apparaîtront à l'aide de la description ci-dessous et des figures l'accompagnant :
- La figure 1 (mentionnée précédemment) représente une liste d'appels perdus présentée sur un terminal téléphonique selon l'art antérieur.
- La figure 2 représente une liste d'appels perdus présentée sur un exemple de réalisation du terminal téléphonique selon l'invention, et un schéma synoptique des sources de données utilisées par cet exemple de réalisation.

Dans l'exemple représenté sur la figure 2, le terminal téléphonique T comporte :
- Des moyens logiciels pour consulter, dans le réseau d'entreprise EN, les bases de données suivantes :
   -- Une base de données DB couplée à un serveur d'appels CH pour mémoriser classiquement les données d'appels perdus pour appelants intérieurs et les appelants extérieurs au réseau d'entreprise EN :
      --- Heure/date de l'appel, nom et prénom de l'appelant pour un appel perdu venant d'un usager intérieur au réseau d'entreprise EN ;
      --- ou heure/date et une indication « Appel Extérieur » pour un appel perdu venant d'un usager extérieur au réseau d'entreprise EN.
   -- Un serveur de présence PR stockant une information de disponibilité pour chaque usager du réseau EN.
   -- Un serveur d'annuaire DS stockant notamment des informations de niveau hiérarchique, d'appartenance à un groupe, etc, pour chaque usager du réseau EN.
   Ces moyens logiciels consultent ces bases de données DB, PR, DS, dans le réseau d'entreprise EN, via un processeur PP qui lit les données d'appels perdus dans la base de données DB, et les traitent de manière classique pour les associer à des données d'usager provenant du serveur de présence PS (pour associer une information de disponibilité), et de l'annuaire DS(pour associer une information de niveau hiérarchique, d'appartenance à un groupe, etc.) si l'appelant est un usager du réseau d'entreprise EN.
- Des moyens logiciels pour consulter, une base de données de contact, dans une mémoire locale LM située dans le terminal T. Ces données de contact ont été créées et stockées dans la mémoire local LM par l'utilisateur du terminal T. Ces données de contact portent notamment sur des personnes qui ne sont pas des usagers du réseau EN, par exemple des clients ou des membres de la famille de l'utilisateur. Dans un exemple de réalisation, cette mémoire LM est la mémoire stockant les données de contacts pour un logiciel de messagerie utilisé par l'usager du terminal T, si ce terminal est un ordinateur personnel. Ces moyens logiciels associent aux données d'un appel perdu les données de contact correspondant à l'appelant, si de telles données sont disponibles. Pour un contact donné, ces données de contact peuvent être :
   -- Un nom et un prénom, un identifiant de client/Société/Département, etc.
   -- Une catégorie à laquelle a été attribué ce contact (Contact privé/professionnel ; contact très important/peu important).
   -- Une tâche à faire pour ce contact, avec un délai.
- Des moyens pour déterminer un poids pour chaque appel perdu qui est à afficher, ce poids étant déterminé en fonction des données d'appels perdus correspondant à cet appel (Heure/date, et optionnellement nombre de tentatives par un même appelant), mais aussi en fonction des premières données propres à l'appelant correspondant à cet appel perdu (Niveau hiérarchique et disponibilité). Selon un mode de réalisation préféré, le poids est déterminé aussi en fonction de secondes données propres à l'appelant, qui sont des données de contacts (Catégorie de l'appelant, tache à faire, etc.) fournies par la mémoire locale LM pour l'appelant correspondant à l'appel perdu considéré.
- Des moyens logiciels pour afficher, sur un afficheur TD intégré au terminal T, une image représentant les appels perdus à afficher, chaque appel perdu étant affiché avec un format qui est fonction du poids déterminé pour cet appel perdu, et de l'heures/date de cet appel perdu.

Selon un premier mode de réalisation, les moyens pour afficher comportent des moyens pour afficher les appels perdus selon une seule dimension, en affichant une simple liste verticale, ordonnée
-- soit par poids décroissants, PUIS par heures et dates décroissantes ;
-- soit par heures et dates décroissantes PUIS par poids décroissants.
Par rapport à un affichage classique, un utilisateur du terminal T voit déjà mieux apparaître les appels ayant des poids plus élevés puisqu'ils sont placés dans des positions prioritaires par rapport à ceux de poids plus faibles.

D'autres modes de réalisation permettent d'améliorer encore cette discrimination.

Selon un deuxième mode de réalisation, les moyens pour afficher une image comportent des moyens pour afficher les appels perdus selon deux dimensions, c'est-à-dire en les répartissant verticalement et horizontalement. L'affichage ressemble alors à un nuage. Les moyens logiciels pour élaborer une image comportent alors des moyens pour afficher chaque appel perdu,
- soit avec une position aléatoire dans le nuage et avec une taille de police croissant avec le poids de l'appel perdu considéré ;
- soit avec une position déterminée par une abscisse et une ordonnée respectivement fonctions du poids et de l'heure/date de l'appel perdu considéré.
Le terminal téléphonique T comporte des moyens permettant à un usager de configurer ce terminal T pour choisir l'un de ces deux procédés.

De préférence, deux polices différentes sont utilisées pour un même appel : une première police qui est la plus grande des deux, pour afficher le nom et prénom, ou l'identifiant de client, ou le numéro de téléphone de l'appelant, d'une part ; et une seconde police pour afficher les autres informations : Par exemple, la fonction de l'appelant et/ou son état de présence, si ces informations sont disponibles pour l'appelant considéré, ainsi que la date et l'heure de l'appel.

Selon une variante de réalisation, la taille d'au moins la première police utilisée pour un appel perdu est fonction du poids attribué à cet appel perdu. De préférence, la taille de la seconde police utilisée pour les autres informations est uniforme pour tous les appels perdus.

Les moyens logiciels pour consulter les sources de données, dans le réseau d'entreprise EN, comportent des moyens pour consulter la base de données d'appels perdus M :
- au démarrage de l'application de téléphonie dans le terminal T,
- ou sur notification d'une évolution du contenu de la base de données M, pour les appels perdus destinés au terminal T considéré, cette notification étant envoyée au terminal T par cette base de données M.

Les moyens pour déterminer un poids pour chaque appel perdu qui est à afficher comportent des moyens pour mémoriser des critères de pondération. Ces critères peuvent prendre en compte des informations stockées dans la base de données d'appels perdus DB (Par exemple la catégorie Appel externe / Appel interne), mais aussi des préférences de l'utilisateur (Par exemple, privilégier le numéro de téléphone de la famille de l'utilisateur du terminal T).

## Revendications

1. Terminal téléphonique (T) permettant d'afficher une liste d'appels perdus, comportant :
- des moyens pour consulter des données d'appels perdus représentant une suite d'appels perdus destinés à ce terminal, ces données étant mémorisées dans une base de données d'appels perdus (M) associée à un serveur d'appels (CH), et ces données comportant l'heures/date de chaque appel perdu et un identifiant de l'appelant ;
- et des moyens pour afficher une image représentant des appels perdus, sur un afficheur (TD) intégré au terminal (T), la représentation de chaque appel perdu étant fonction de l'heures/date de l'appel perdu, fournie par la base de données d'appels perdus (M);
**caractérisé en ce qu'**il comporte en outre :
- des moyens pour consulter des premières données propres à un appelant, dans au moins une seconde base de données (DB, PR, DS) stockant des données propres à des usagers d'un réseau de téléphonie (EN) ;
- des moyens pour déterminer un poids pour chaque appel perdu qui est à afficher, ce poids étant déterminé en fonction des premières données propres à l'appelant correspondant à cet appel perdu ;
et **en ce que** les moyens pour afficher une image, comportent des moyens pour afficher chaque appel perdu avec un format variable qui est fonction du poids déterminé pour cet appel perdu.

2. Terminal téléphonique selon la revendication 1, **caractérisé en ce qu'**il comporte en outre des moyens pour consulter des secondes données propres à un appelant, dans une troisième base de données (LM) stockant, dans le terminal (T) des données propres à des appelants ;
et **en ce que** les moyens pour déterminer un poids pour chaque appel perdu comportent des moyens pour déterminer ledit poids en fonction aussi des troisièmes données propres à l'appelant correspondant à l'appel perdu.

3. Terminal téléphonique selon la revendication 1, **caractérisé en ce que** les moyens pour afficher chaque appel perdu avec un format variable qui est notamment fonction du poids déterminé pour cet appel perdu comportent des moyens pour afficher des appels perdus selon une seule dimension, en affichant une simple liste verticale, ordonnée
-- soit par poids décroissants, puis par heures et dates décroissantes ;
-- soit par heures et dates décroissantes puis par poids décroissants.

4. Terminal téléphonique selon la revendication 1, **caractérisé en ce que** les moyens pour afficher chaque appel perdu avec un format variable qui est notamment fonction du poids déterminé pour cet appel perdu comportent des moyens pour afficher des appels perdus selon deux dimensions, avec un positionnement aléatoire de chaque appel et avec une taille de police fonction du poids de l'appel considéré.

5. Terminal téléphonique selon la revendication 1, **caractérisé en ce que** les moyens pour afficher chaque appel perdu avec un format variable qui est notamment fonction du poids déterminé pour cet appel perdu comportent des moyens pour afficher des appels perdus selon deux dimensions, la représentation de chaque appel perdu ayant deux coordonnées respectivement fonctions du poids et de l'heure/date de cet appel perdu.

6. Terminal téléphonique selon la revendication 1, **caractérisé en ce que** les moyens pour afficher chaque appel perdu avec un format variable qui est notamment fonction du poids déterminé pour cet appel perdu comportent des moyens pour afficher un même appel avec deux polices différentes : une première police qui est la plus grande des deux, pour afficher un nom/prénom, ou un identifiant de client, ou un numéro de téléphone de l'appelant, d'une part, et une seconde police pour afficher d'autres informations, d'autre part.

7. Terminal téléphonique selon la revendication 6, **caractérisé en ce que** la première police a une taille qui est fonction du poids attribué à l'appel perdu considéré.

8. Terminal téléphonique selon la revendication 7, **caractérisé en ce que** la taille de la seconde police est uniforme pour tous les appels perdus.
